# EUROPEAN PATENT SPECIFICATION

(11) **EP 3 139 078 B1**
(45) Date of publication and mention of the grant of the patent: **19.06.2019**
(21) Application number: 16186898.9
(22) Date of filing: 01.09.2016
(51) Int. Cl.: F16L 37/26, F16L 17/067

(54) **A CONNECTION MECHANISM FOR HYDRAULIC SYSTEMS**
VERBINDUNGSMECHANISMUS FÜR HYDRAULIKSYSTEME
MÉCANISME DE CONNEXION POUR SYSTÈMES HYDRAULIQUES

(30) Priority: 01.09.2015 DE 102015114612
(43) Date of publication of application: 08.03.2017
(73) Proprietor: Gealan Formteile GmbH, 95145 Oberkotzau (DE)
(72) Inventor: Saunus, Christian, 08223 Grünbach (DE)
(74) Representative: Fleuchaus, Michael A.

(56) References cited:
- FR-A- 1 223 094
- GB-A- 969 837
- US-A- 295 151
- US-A- 749 496
- US-A- 760 424
- US-A- 979 433
- US-A- 1 739 131
- US-A- 2 933 334
- US-A- 3 260 539
- US-A- 4 709 726

## Description

The present invention relates to a connection mechanism for hydraulic system, particularly a connection mechanism of two tubular components of the hydraulic system which can be connected and secured without the help of any tools or additional connection elements.

In conventional hydraulic systems, hydraulic components have a passage therein for delivering a fluid through the component. A typical connection between two or more hydraulic components, particularly tubular components is secured by threaded elements, such as union nuts, flanges, and the like. Generally, the hydraulic components are pressed together in an axial direction by the threaded elements, whereby gaskets arranged in-between the hydraulic components provide a seal for are sealing off the hydraulic circuit.

In the prior art connection of two components, the two components are generally assembled by aligning them in an axial direction and consecutive operation of securing mechanisms, such as threaded elements or similar clamping mechanisms. As a result, the threaded elements or the clamping mechanisms, i.e. the securing mechanisms receive any axial forces exerted on the on the hydraulic components by internal pressure of the hydraulic system.

However, using such securing mechanisms to secure hydraulic components together has several drawbacks. Firstly, they require additional parts separate from the hydraulic components, which increases the complexity and cost of the hydraulic system (i.e., additional elements required for the system). Additionally, tools are generally needed for operating the securing mechanisms during assembly or disassembly of the connection. Amongst other potential issues, such as breakage of the securing mechanism by ill-application of the tools, the assembly and disassembly process may be prolonged.

Also, the process of connecting the hydraulic components generally requires that a proper alignment be made and upheld when the securing mechanism is operated, e.g. so that a union nut engages with the corresponding thread in a correctly aligned manner. This is particularly relevant where plastic components are being used for the securing mechanism. It may take some considerable effort depending on how strict the alignment must be as well as the available space, e.g. for manually holding the components in place during alignment of the components. US3260539 discloses a connection mechanism according to the preamble of claim 1.

Consequently, there is a need for an improved mechanism for connecting hydraulic components of a hydraulic system that improves at least in part over known connection mechanisms. In particular, it is an objective of the present invention to provide an easy to use hydraulic connection system that provides for a reliable connection while allowing easy and optionally tool-free assembly or disassembly.

This object is at least partially achieved by a connection mechanism as defined in claim 1. Embodiments of the invention are the subject matter of the dependent claims.

Accordingly, a connection mechanism according to the present invention comprises a first component and a second component, the first component having a first outer body defining a first passage in an axial direction for delivering fluid there through, and the second component similarly having a second outer body defining a second passage in an axial direction for delivering fluid there through. The connection mechanism further including at least one receptacle element including one or more blocking portions, the one or more blocking portions defining a space in the receptacle element, and at least one engagement element including one or more contact portions extending substantially in a radial direction of the engagement element, the engagement element fitting into the space defined by the one or more blocking portions such that the one or more contact portions are substantially engaged with the one or more blocking portions when the engagement element is engaging the receptacle element, ie. is in the fully engaged position.

The connection mechanism of the invention is characterized by the technical features of claim 1.

A connection mechanism according to the present invention is an arrangement serving to connect a plurality of components of a hydraulic system, for example for connecting elements like flow measurement devices to other components of the system, or even for simply connecting piping, or the like. Two components are indicated in the description below, which may be individual separate components or two parts of a larger device, such as a heating system, which are to be connected together. Components external to such device may also be connected to devise using the connection mechanism of the invention.

A receptacle element is an element containing a space for receiving an engagement element. The one or more blocking portions of the receptacle element may be walls thereof and/or additional modules provided to adjust the shape of the space in the receptacle element, particularly to enable a snug fit of the engagement element within the receptacle element.

When first and second components of the hydraulic system are to be connected together, at least one engagement element is provided on one of the components and at least one receptacle element is provided on the other component. The elements may be provided during production of the connection components, which makes them an integral part to the components, or post-production of the components as add-on elements. In the latter case, the elements may be releasably connectable and used for a variety of different tubular components.

The at least one receptacle element is constructed to have a space so as to accommodate a corresponding engagement element, preferably by a snug fit. This space is arranged so as to be able to receive the engagement element from a substantially radial direction, with respect to the component's longitudinal axis, and have means, i.e., one or more blocking means, to minimize movement of the engagement element, particularly in the axial direction of the components when in the engaged position.

In order to connect the components together, the connection mechanism of the present invention requires relative movement, particularly translational movement, of the connection components relative to one another in a substantially radial direction. This movement facilitates the at least one engagement element to slide into the space of the corresponding receptacle element. Once engaged, whereby the engagement element is typically blocked from further insertion into the space, the engagement element would also be substantially restricted in movement in all directions except for the radial direction by which the elements were engaged with each other.

The engagement element is thus snuggly fit into the corresponding receptacle element and a form lock/positive fit is realized. The form lock thus receives any axial forces of the connection components relative to one another. In particular, a snug fit of the engagement element generally provides for substantially no movement of the engagement element, for example by disabling any move of the engagement element within the longitudinal space defined by the one or more blocking portions of the receptacle element(s). In particular, the shape of the engagement element or at least part of the engagement element, may substantially correspond to the shape or space of the receptacle element to provide such snug fit.

A translational movement which is linear in a substantially radial direction is essentially a movement in which the first and second components have their centre axis substantially parallel but offset at an initial, pre- or disengaged position, i.e., before assembly. The movement to the engaged position, particularly engagement of the respective receptacle element(s) and the engagement element(s) of the first and second components, during assembly eliminate the offset of the centre axis.

A translational movement which is along a curved path ending in a substantially radial direction differs from the linear movement in that the centre axis of the first and second components are offset but not parallel at an initial, pre- or disengaged position, i.e., before assembly. For example, the centre axis of the first and second components may be configured to be angled with respect to each other in the disengaged position and the movement along the curved path to reduce the angle results in the engagement, particularly engagement of the respective receptacle element(s) and the engagement element(s) of the first and second components. The first and second components are engaged when the angle is substantially 0.

In both cases, the engagement element(s) and the receptacle element(s) slidingly engage in a substantially radial direction. Such movement is in contrast to connection of the first and second components according to the prior art, ie. by engagement in an axial direction and potentially by use of securing mechanisms in such axial direction, upon which any forces, such as by internal pressure of the hydraulic system will also act in an axial direction.

In the present invention, the receptacle element(s) and the corresponding engagement element(s) of the first and second components themselves engage, which enables the connection mechanism itself to inhibit the axial movement of the elements and the first and second components accordingly, and without the need for additional securing mechanisms to be used to force the two components in an axial direction. It follows that the connection can be assembled (and disassembled) substantially tool free.

In a hydraulic system the forces acting on a connection are predominantly in an axial direction, given the forces acting radially on the connecting region cancel each other out and are received by the bodies of the components themselves. As such, the configuration of the present connection mechanism, which connects the first and second components together from a substantially radial direction, is able to provide a secure connection of the first and second components as substantially no resulting force exists, even in a pressurized hydraulic system, that will cause a displacement of the first and second component along the assembly/disassembly direction, i.e. radial direction. Given this, there is only a marginal risk of the components being disengaged by wear or the like during operation of the hydraulic system.

Accordingly, a strong connection which is easily and quickly assembled in a tool-free manner is upheld by the connection components themselves. No securing mechanism pushing the components towards one another in an axial direction is necessary to be introduced. Complexity and cost reductions can therefore be achieved.

In an embodiment of the present invention, the first and second elements are tubular hydraulic components, and preferably, the openings of the first and second passages are substantially of the same cross sectional shape and configured for being substantially co-aligned when the receptacle elements and the engagement elements are engaged.

Providing tubular hydraulic components, particularly where the cross sectional shape of the openings of the passages match, facilitates a smooth delivery of fluid through the passages and the connection without any disruption of the flow of fluid, or the like.

In another embodiment, a centre point of the opening of the first passage and a centre point of the opening of the second passage substantially coincide when the receptacle elements and the engagement elements are engaged, and wherein the respective centre points do not coincide when the receptacle elements and the engagement elements are not engaged.

The present invention differs from a number of prior art methods in that the first and second components are not brought together in an axial manner in which the centre axis must substantially be aligned before connection of the first and second components. The present invention allows for the first and second components to initially have the respective passageways to be offset and/or angled relative to one another such that the centre points of the passages do not coincide before assembly. The engagement of the receptacle element(s) and the engagement element(s) via the relative translational movement of the first and second components along the engagement path then aligns the first and second passages.

In another embodiment, the first component includes at least one further engagement element arranged at the said axial end, and optionally, the further engagement element being integrally formed with the at least one receptacle element. Additionally, in this embodiment the second component has at least one further receptacle element arranged at the said axial end, and optionally, the further receptacle element(s) are integrally formed with the at least one engagement element.

In an embodiment, the at least one receptacle element, and the further engagement element, may be arranged radially about the opening of the first passage, optionally adjacent to each other, and further optionally symmetrically with respect to a centre point of the opening of the first passage. Also, the at least one engagement element, and optionally the further receptacle element, may also be arranged radially about the opening of the second passage, optionally adjacent to each other, and further optionally symmetrically with respect to a centre point of the opening of the second passage.

By providing both engagement and receptacle elements on axial ends of both the first and second components, and preferably in a symmetric way about the passage opening, more secure and balanced engagement can be established. Integral formation of the engagement and receptacle elements on an axial end of a component provides advantages in production and integrity of structure. The construction also allows for a more balanced distribution of stresses across and around the perimeter of the component during use in the hydraulic system, in addition to a more reliable connection mechanism.

In a further embodiment, the at least one receptacle element, and optionally the further engagement element, is arranged in a half-ring geometry, and the at least one engagement element, and optionally the further receptacle element, is arranged to have a corresponding geometry as the at least one receptacle element, and optionally the further engagement element.

A half-ring geometry of the receptacle and engagement elements provides a space efficient and effective construction that facilitates the sliding engagement of the elements. Additionally, such a geometry matches well with tubular components that provides a streamlined and practical design to the hydraulic system.

The receptacle elements and the engagement elements may be configured as interlocking elements to enhance the engagement of the receptacle and engagement elements as well as the inhibition of any remaining radial or circular forces acting on the elements and the respective components. The interlocking elements may be in the form of at least one snap-in arrangement, tooth and dent, or the likes.

Further to its potential securing function, such interlocking elements are useful as a feedback mechanism during assembly of the components telling the user when the engaged position is fully reached, e.g. by audible or tactile feedback in the form or a clicking noise, or similar.

In an embodiment, the connection mechanism further comprises at least one fastening element which is securable with at least one of the receptacle elements and the engagement elements while engaged to inhibit radial movement of the receptacle elements relative to the engagement elements.

The use of the fastening element(s) prevents unintended disengagement of the receptacle and engagement elements, and thus the first and second components, by radial movement thereof. Such radial movement may be caused by vibration, unintentionally during servicing work of components near the connection mechanism, etc. The fastening element is preferably designed not to withstand any relevant forces, e.g. in an axial direction of the components, but merely to make sure the engaged position is not inadvertently disengaged. As such, the fastening element may be of a light construction and easy and tool-free to be assembled or disassembled.

For example, the fastening element may be a C-shaped ring that is snapped around the engaged receptacle and engagement elements when the connection mechanism is in the engaged position. Alternatively, the fastening element may be a snap fastener in the form of a hook or a buckle which can be secured to the receptacle elements and the engagement elements, particularly into a corresponding latch or groove provided thereon, when the receptacle element(s) and the engagement element(s) are engaged.

In an embodiment, the fastening element may be in the form of a buckle and provided to be connected to the first or second component, and optionally the receptacle or engagement element thereof.

In yet a further embodiment, the first and second components are made of metal, plastic or combinations thereof. Plastic or metallic components can be desirable in the context of the application for various reasons. The present invention can be applied to both types of components, and combinations thereof.

The connection mechanism of the present invention further comprises a seal configured to seal a connecting region between the first passage and the second passage. This helps to ensure a tight connection between the first and second components, particularly the first and second passages thereof, in pressurized systems. The seal prevents leakage and unwanted strain in the connecting region between the first and second passages. The seal may take a number of forms such as a coating, adhesive material, or a specialized sealing component. The seal may be implemented as a separate component that is arranged in a seal seat of the first and/or second components, and/or a sealing element that is integrally connected to one of the component, such as by material fit, and in particular by means of a multi-component injection moulding process where sealing element produced from a soft-elastic material is produced in integral connection with the elements made from a hard-plastic material of the connection mechanism.

According to the invention, the sealing element is configured to improve the seal of the connecting region when internal pressure of the hydraulic system is applied to the seal such as in the case of a C-seal where the open section of the C-seal is exposed to the internal fluid pressure.

A C-seal is particularly effective in the present invention for securely sealing the connecting region between the first and second passages while at the same time simplifying the assembly process given protruding elements of the seal can be avoided. When fluid is delivered between the first and second components, the fluid fills an inner groove of the C-seal creating pressure on the sides of the C-seal to force the sides of the seal against one face side of the first component, e.g. a wall for supporting the position of the C-seal, i.e. the seal seat, and one face side of the second component, e.g. a sealing face.

While it may be preferable to use such seals that will not protrude from the seal seat before assembly of the connection mechanism, the present invention can also be utilized with seals that are indeed protruding from the seal seat and even beyond the passage opening before assembly, such as, for example gaskets, and which are then squeezed between the two components during assembly to provide a sealing there-between. Such a sealing arrangement may be preferable in non-pressurized systems.

In an embodiment, the receptacle element includes a protrusion receiving portion or a protrusion, and the engagement element includes a protrusion or a protrusion receiving portion, respectively, the protrusion extending in the radial direction and configured to engage with the protrusion receiving portion in the course of the translational movement, to block movement in a rotational direction about the components' axes.

Such elements may serve to align the positions of the receptacle and engagement elements in the disassembled position and keep them correctly aligned during translational movement of the first and second components. Further, such elements may serve to prevent any rotational movement of the components relative to one another in the engaged position or during assembly while moving the components relative to one another.

For example, the engagement element may include a protruded tab and the corresponding receptacle element may include a groove which matches the shape of the protruded tab. The engagement element and the corresponding receptacle element may only be correctly moved along the radial direction and ultimately snugglyfit when the protruded tab is aligned and engaged in the groove.

The features of the embodiments discussed above can be combined in any combination which achieves the effect for solving any of the problems discussed above. It is understood that various embodiments which are not expressly described in their combination form part of the present disclosure and as disclosed in the appended claims.

Exemplary embodiments of the present invention will hereafter be described with respect to the following figures in which like numerals, if not otherwise specified, denote functionally or structurally like elements.
- **Figure 1a**: illustrates a schematic front view of a first component according to a first exemplary embodiment of the present invention.
- **Figure 1b**: illustrates a schematic front view of a second component according to the first exemplary embodiment of the present invention.
- **Figure 2**: illustrates a schematic perspective exploded view of the first and second components according to the first embodiment of the present invention in a disengaged state.
- **Figure 3a**: illustrates a schematic cross-sectional view in an axial direction of the connection mechanism before engagement of the receptacle and the engagement elements according to the first embodiment of the present invention.
- **Figure 3b**: illustrates a schematic cross-sectional view in an axial direction of the connection mechanism after engagement of the receptacle and the engagement elements according to the first embodiment of the present invention.
- **Figure 4a**: illustrates a schematic cross-sectional view in an axial direction of the connection mechanism before engagement of the receptacle and the engagement elements according to a second exemplary embodiment of the present invention.
- **Figure 4b**: illustrates a schematic cross-sectional view in an axial direction of the connection mechanism after engagement of the receptacle and the engagement elements according to a second exemplary embodiment of the present invention.
- **Figure 5a**: illustrates a schematic front view of an exemplary fastening element before application onto a connection mechanism of the present invention.
- **Figure 5b**: illustrates a schematic front view of an exemplary fastening element after application onto a connection mechanism of the present invention.

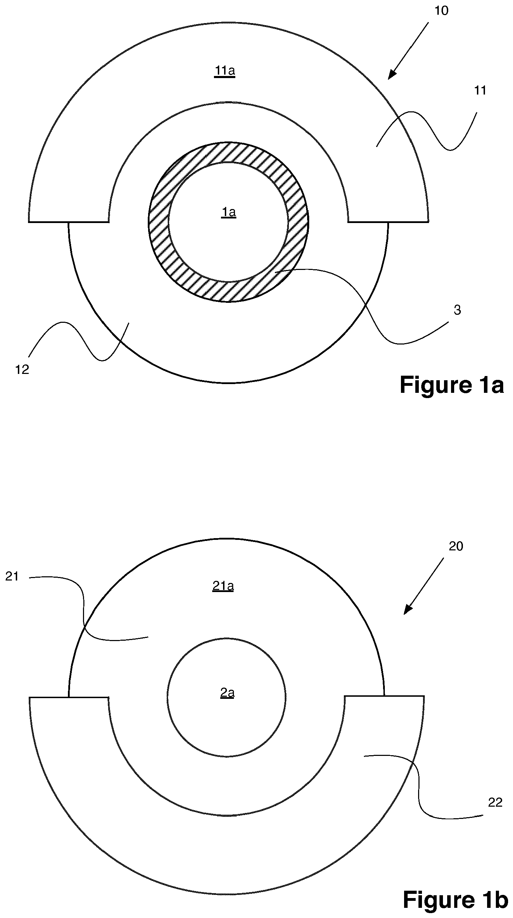

Figure 1a depicts a front view of the first component 10 according to the first embodiment of the present invention. In this embodiment, the first component 10 is arranged on a radial tubular element, the first component having a generalized half-ring geometry. Arranged on one half of the first component 10 is a receptacle element 11. The receptacle element 11 comprises a plurality of blocking portions 11a, 11b, 11c; a front blocking portion 11a is shown in this figure. Arranged on the other half of the first component 10 is a further engagement element 12 which is to be engaged into a corresponding receptacle element of a second component. In this embodiment the receptacle element 11 and the engagement element 12 are arranged radially around the first component 10 and adjacent to each other.

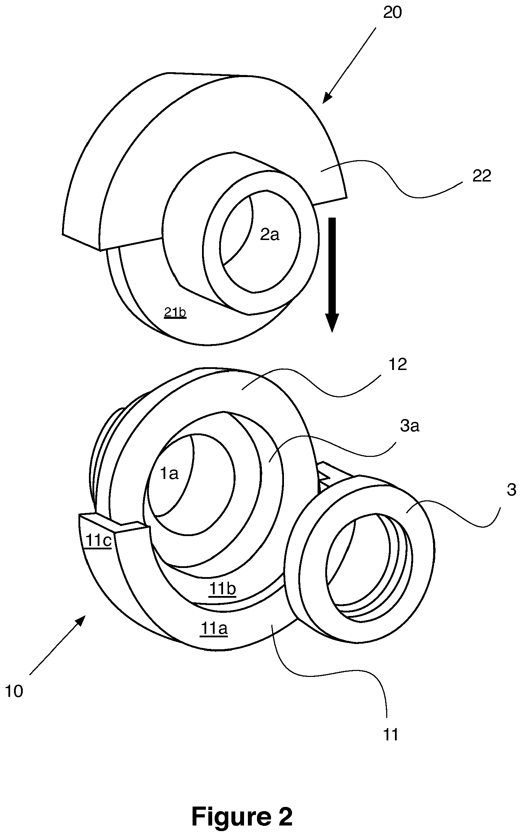

The first component 10 of the first embodiment also includes a first tubular passage 1a for delivering fluid there-through. A seal 3, according to the invention a C-seal, is provided in a sealing seat portion 3a (see figure 2). The sealing seat portion 3a, in this embodiment, is a groove provided around the opening of the first passage 1a such that the seal contacts on one axial end the first component and, when in the engaged position, on the other axial end the second component 20 to provide a fluid-tight seal between the two components.

Figure 1b depicts a front view of the second component 20 according to the first embodiment of the present invention. The second component 20 mirrors essentially the half-ring geometry of the first component 10. In particular, the second component 20 comprises an engagement element 21 arranged on one half of the second component 20 and a further receptacle element 22 arranged on the other half of the second component 20. The engagement element 21 includes a plurality of contact portions 21a, 21b, 21c. The front contact portion 21a shown in figure 1b is constructed to make substantially flush contact with a back portion 11b of the receptacle element 11 of the first component when the first component 10 and the second component 20 are engaged.

It is noted that the description regarding the engagement element 21 and the corresponding receptacle element 11 similarly applies to the further engagement element 12 and the corresponding further receptacle element 22 given the substantially mirrored arrangement.

The second component 20 also includes a second tubular passage 2a for delivering fluid through the second component 20. In the embodiment shown in figure 1, the seal provided in the first component 10 is enough to provide sufficient sealing for the connection mechanism and no further seal is required in the second component 20.

In other embodiments of the present invention, further sealing elements may be provided in one or both of the first and second components 10, 20 to enhance the overall sealing capacity.

In the connection mechanism of the first embodiment of the present invention, the first component 10 and the second component 20 are configured to allow substantially linear translational movement towards one another such that the engagement element 21 of the second component 20 engages with the receptacle element 11 of the first component 10. At the same time, the further engagement element 12 of the first component engages with the further receptacle element 22 of the second component 20.

In this embodiment, the openings of the first and second passages 1a, 2a are substantially of the same cross sectional shape and configured to be substantially co-aligned when the receptacle element 11 and the engagement element 21 are engaged, i.e. the center points of the opening passages of both the first and second components are substantially co-alligned.

Figure 2 depicts the first component 10 and the second component 20 of the connection mechanism in an exploded view at an initial position before assembly. In this figure, the second component 20 is shown at the top with the back being visible whereas the first component 10 is shown at the bottom with the front visible. As can be more clearly seen in figure 2, the engagement elements 21, 12 and the receptacle elements 11, 22 are provided at the distal ends of their respective components.

The seal 3 is shown extracted forward to show the sealing seat portion 3a. The seal 3 can be preassembled in the first component 10, e.g. by force fitting or even by a material fit resulting from a multi-component injection moulding process, so that the assembling process of the connection mechanism is simplified. Rounded edges or an insertion angle on the contact surface to the sealing may be useful to avoid a damage of the sealing, in particular when the seal is in the form of a gasket that will be squeezed between the first and second components during assembly and in the engaged position, and to simplify the assembling of the connection mechanism.

Additionally, the one or more blocking portions of the first component 10 comprises a front portion 11a, a back portion 11b and a link portion 11c. The front portion 11a is positioned distally from the back portion 11b with respect to the axial direction of the component, and the link portion 11c connects the front portion 11a to the back portion 11b such that the space in the receptacle element 11 is defined between the front portion 11a and the back portion 11b.

In order to snuggly fit the engagement element 21 of the second component 20, the space is substantially the same width as the width of the engagement element 21 in an axial direction. This width can be controlled, in this embodiment, by the dimension of the link portion 11c. The space can also be defined in other manners, for example by changing the dimensions and shapes of the front portion 11a and back portion 11b. With respect to the second component 20 of the first embodiment, the engagement element 21 comprises a front contact portion 21a, a back contact portion 21b, and a top contact portion 21c.

When the engagement element 21 engages the receptacle element 11 of the first component 10, the engagement element 21 is inserted into the space between the front portion 11a and the back portion 11b and abuts the link portion 11c, such that the front contact portion 21a substantially contacts the back portion 11b, the back contact portion 21b substantially contacts the front portion 11a and the top contact portion 21c substantially contacts the link portion 11c.

The engagement element 21 is snuggly fit into the receptacle element 11 substantially producing a positive fit between the engagement and receptacle portions. In orderto facilitate insertion of the engagement elements and the receptacle elements, insertion aids such as rounded edges or the arrangement of insertion angles at the front and/or back portions of the receptacle elements 11 and/or the further receptacle elements 12 may be useful.

As can be taken from figure 2, the same engagement will occur between the further engagement element 12 of the first component 10 and the further receptacle element 22 of the second component 20. There is thus an interlocking form between the top half and the bottom half of the first component 10 and the second component 20 when the engagement elements 21, 12 and the receptacle elements 11, 22 are engaged. In this configuration, axial movement of the first component 10 and the second component 20 is inhibited by the blocking portions of the respective receptacle elements 11, 22 and any axial stress is balanced across both components.

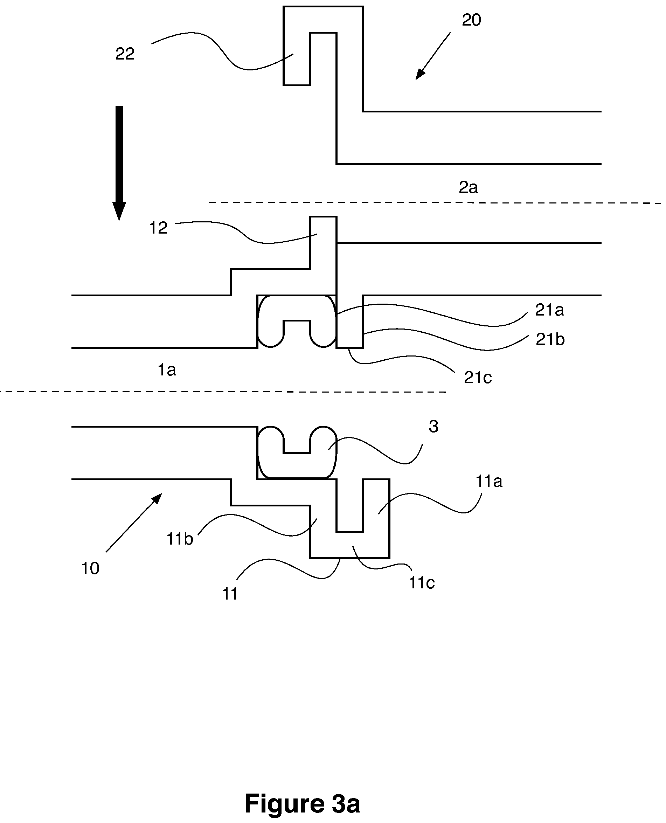

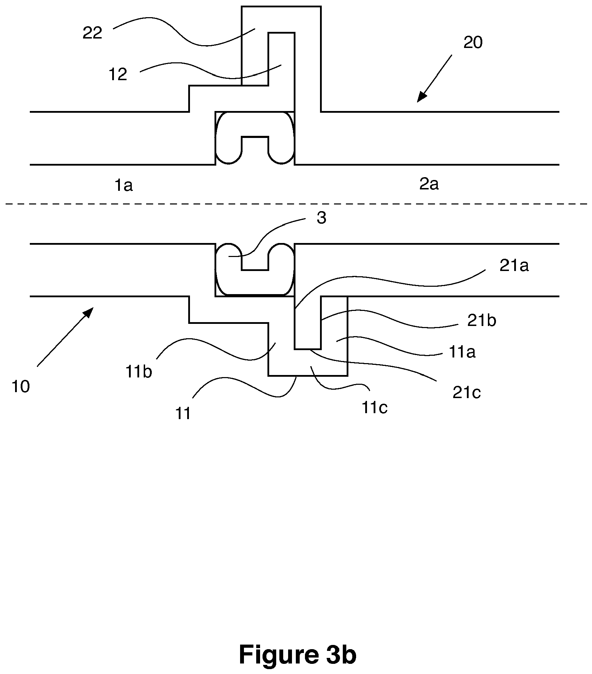

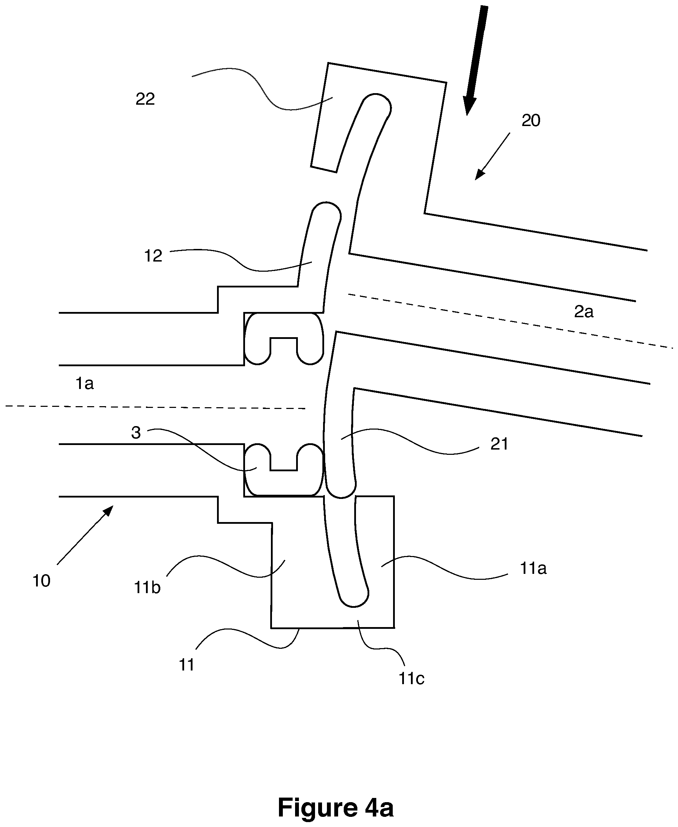

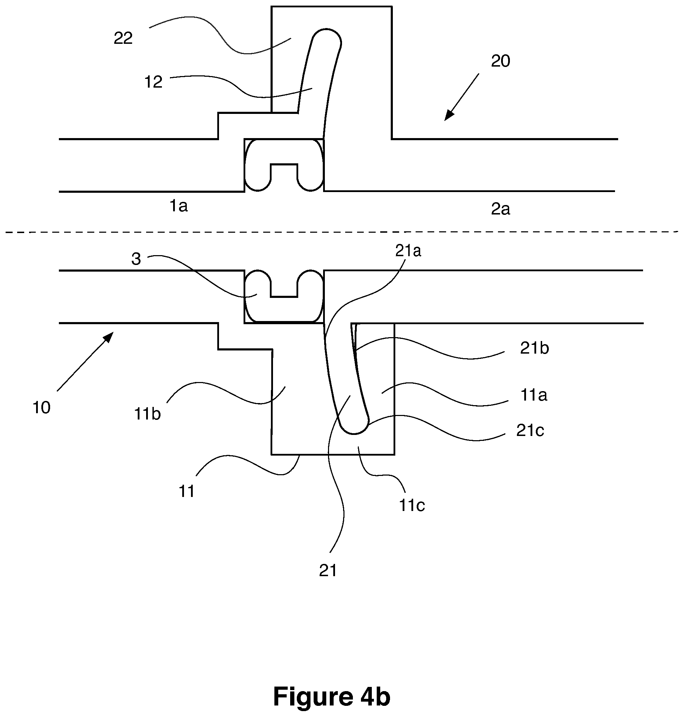

In the following, possible translational movements between the first component 10 and the second component 20 to conduct the engaging between the two will be described with reference to figures 3a, 3b and figures 4a, 4b.

Figures 3a and 3b depict the first embodiment of the connection mechanism of the present invention in a side cut view. In figure 3a, the first component 10 and the second component 20 are in a pre-/disengaged position, i.e., before connection of the assembly. The first and second components 10, 20 are configured to be translationally moved linearly in a substantially radial direction relative to the axial direction of the components to result in the configuration shown in figure 3b, i.e. after connection of the assembly.

In the pre-/disengaged position of figure 3a, the centre axes of the first component 10 and the second component 20 are shown to be parallel but offset from one another as the second component 20 is depicted above the first component 10. As the second component moves translationally downwards as shown by the arrow of figure 3a, the offset between the respective axes is gradually reduced.

The space defined by the blocking portions 11a, 11b, 11c is shown to be a groove shaped to substantially match the protrusion of the engagement element 21. The engagement element 21 can therefore radially slide downwards into the receptacle element 11 when the first and second components 10, 20 are translationally moved together, to ultimately produce a substantially positive fit.

To accommodate this fitting, it can be seen in this embodiment that the radial surfaces of the seal 3, front portion 11a, back portion 11b, front contacting portion 21a and back facing portion 21b, respectively, are aligned so as to be parallel with the direction of translational movement and matching the portion opposite to it in the engaged state. The same holds true for the mirrored top half of the first and second components 10, 20. Such a configuration allows a smooth connection of the first and second components 10, 20 during the translational movement and engagement of the respective engagement elements 21, 12 and receptacle elements 11, 22.

In particular, however, given the specific arrangement of the connection mechanism of the invention, the radial surface of the seal 3 need not be flush with the back portion 11b and the front contacting portion 21a but may be squeezed into position upon assembly of the connection mechanism.

Figure 3b depicts an engaged position where the first and second components 10, 20 have been translationally moved such that the engagement elements 21, 12 and the receptacle elements 11, 22 are engaged. As seen in the figure, the engagement element 21 is slid into the receptacle element 11 from a radial direction. The front contact portion 21a is in contact with the back portion 11b and the back contact portion 21b is in contact with the front portion 11a.

The top contact portion 21c of the engagement element also abuts against the link portion 11c while the top surface of the front portion 11a abuts against the surface of the second component adjacent to the back contact portion 21b to indicate an engaged position and stop further translational movement in the radial direction of the first and second components 10, 20.

In this engaged state, the fluid paths of the first passage 1a and the second passage 2a are connected while the centre axis of the first and second passages 1a, 2a coincide, and further the openings and passages are substantially co-aligned to provide smooth fluid flow.

As shown in figures 3a and 3b, on each of the tube component is a half-shell geometry included, namely the arrangement of the receptacle element 11 and the further engagement element 12 of the first tubular component 10 and the engagement element 21 and the further receptacle element 22 of the second tubular component 20. By the radial assembling of the tube components, the two "half shells" interlock and realize a form lock.

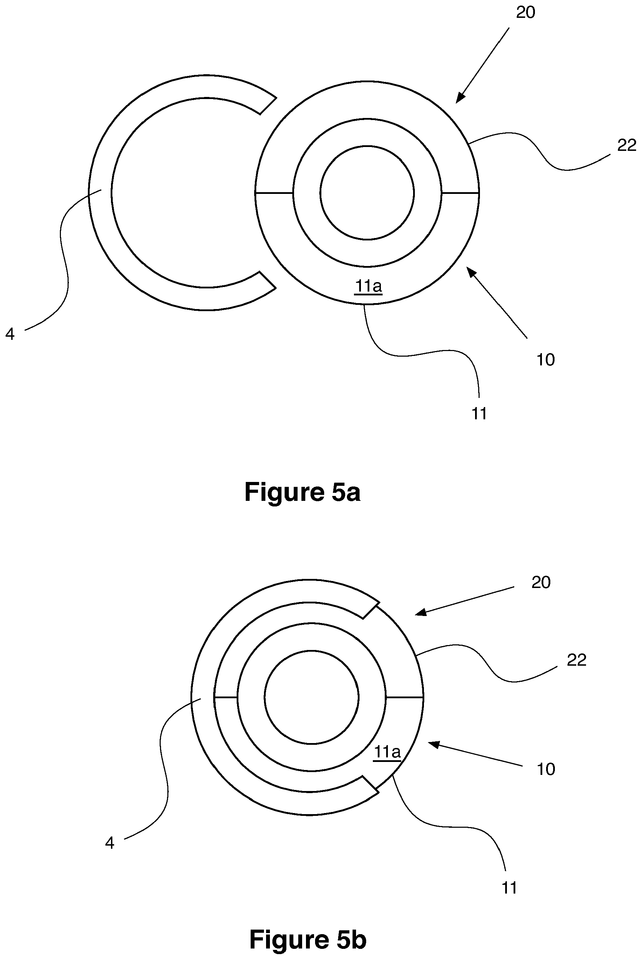

Axial forces on the tube components, e.g. by inner pressure, are received by this form lock. In a typical hydraulic application there is minimal radial force on the connection of the tubular components given inner pressure in radial direction is received by the axial body of the tubular components and effectively cancels out. Optionally, the first and second tubular components 10, 20 may be fixed in place relative to one another in the radial direction by a fastening means later discussed with respect to figures 5a and 5b, for example, a snap fastener to avoid unintended dislocation. The fastening means may be provided as a separate element or on the first component 10 and/or the second component 20, particularly as part of the engagement element 21 and/or the receptacle element 11.

Additionally, while not shown, a further mechanism may be provided to further inhibit unintended movement, in particular in a rotational direction, and also to facilitate assembly: The receptacle element(s) may include a protrusion receiving portion, and the engagement element(s) may include a protrusion. The protrusion would extend in the radial direction and once engaged with the protrusion receiving portion in the course of the translational movement of the first and second components 10, 20, block movement in a rotational direction about the components' axes.

The protrusion and the protrusion receiving portion may be provided on the receptacle element(s) and the engagement element(s), respectively, and any number of such mechanism may be provided on the first and second components 10, 20. Such mechanism may be necessary if the receptacle elements 11 and engagement elements 21 are not completely form fitted together and also aids in aligning the engagement of the receptacle element 11 and the engagement element 21.

Figures 4a and 4b depict a second embodiment of the connection mechanism of the present invention. The elements are essentially the same as that of the first embodiment, with the exception that the engagement element 21 and the further engagement element 12 are slightly angularly shaped. The receptacle element 11 and the further receptacle element 22, respectively, match the shape of these elements accordingly.

The shape of these elements correspond to the translational movement of the first and second components 10, 20 in the second embodiment of the present invention. The first and second components 10, 20 are configured to be translationally moved along a curved path ending in a substantially radial direction relative to the axial direction of the components. Figure 4a shows the pre-engaged state while figure 4b shows the engaged state of the second embodiment. The direction of the translation movement is shown by the arrow of figure 4a.

In principle, the connection mechanism of the second embodiment operates substantially in the same manner as the first embodiment, however, the elements are not assembled by way of a parallel movement of one component but, in contrast, by a rotational movement. As such, devices using the assembly mechanism of the present invention may be assembled by either a push direction (linear translational movement) or by a turning movement, where the device might be in the form of a tommy.

For example, the space defined by the blocking portions 11a, 11b, 11c is shown to be a groove shaped to substantially match the protrusion of the engagement element 21. The engagement element 21 can therefore radially slide downwards into the receptacle element 11 when the first and second components 10, 20 are translationally moved together. Again, insertion aids in the form of rounded edges or insertion angles may be provided at the receptacle, as is shown at the front portion of lower receptacle 11.

Moreover, it may be seen, however, this is not a necessary implementation, that in this embodiment the radial surfaces of the seal 3, front portion 11a, back portion 11b, front contacting portion 21a and back facing portion 21b may also aligned so as to be parallel with the direction of the movement and matching the portion opposite to it in the engaged state.

One difference in the second embodiment resulting from the different assembly movement is that in the pre-/disengaged position of figure 4a, the centre axes of the first components 10 and the second component 20 are not parallel but angled with respect to each other. As the second component moves translationally downwards as shown by the arrow of figure 4a, the angle between the respective axes is gradually reduced and results in the connection of the first and second components 10, 20 when the axes are substantially parallel.

The second embodiment of the present invention increases the flexibility by which the components are to be assembled, specifically in application with limited assembly space or where the device employing the connection mechanism benefits from such arrangement.

Figures 5a and 5b depict an exemplary fastening element 4 according to the present invention. The fastening element 4 is configured to inhibit relative radial movement between the first and second components 10, 20. Referring to figure 5a, a front view of the connection mechanism including the first and second components 10, 20 engaged is shown.

Figure 5a illustrates the exemplary fastening element 4 as having the shape of a C-ring spring. The C-ring may be made of an elastic material, e.g. a spring type sheet metal to flexibly fit over the first and second components 10, 20, while engaged, in a snap on manner. In addition, the elastic material has the strength to retain C-ring shape and to absorb regular radial forces acting on the connecting region of the connection mechanism, such as by vibration or by inadvertent operation. The C-ring shape thus provides that the fastening element will not inadvertently come off the mechanism once snapped on.

Figure 5b provides a front view of the fastening element 4 applied to the connection mechanism of the present invention. As shown, the fastening element 4 in the form of the C-ring contacts a portion of the first component 10 and a portion of the second component 20, in this example the receptacle element 11 and the further receptacle element 22, respectively. The elastic nature of the C-ring and the contacting portions provide a stabilizing force which inhibits radial movement of the first and second components 10, 20. In this way unintended disassembly of the first and second components 10, 20 can be safely avoided.

Although the fastening element 4 is shown in figures 5a and 5b to be applied to one side of the connection mechanism, the fastening element 4 is not limited in this manner. For example, it is conceived that the fastening element 4 may by a simple splint extending axially through the receptacle or engagement elements, or may comprise two parts on both sides of the connection mechanism. Additionally, while the fastening element 4 is shown as a C-ring for clamping the first and second components 10, 20 together, the fastening element 4 may also take other forms to achieve the same effect. For example, the fastening element may be arranged as hooks or buckles on the outer surface of the ends of the receptacle element 11, with adjacent hooks or dents receiving a part of the buckle.

While the above description has been made with reference to specific embodiments, the present invention is not limited to such characterization given that the characteristic features of the present invention as defined in the claims are met.

## Claims

1. A connection mechanism for a hydraulic system comprising:
a first component (10) having a first outer body defining a first passage (1a) in an axial direction for delivering fluid there through,
a second component (20) having a second outer body defining a second passage (2a) in an axial direction for delivering fluid there through,
at least one receptacle element (11) including one or more blocking portions (11a, 11b, 11c), the one or more blocking portions defining a space in the receptacle element, and
at least one engagement element (21) including one or more contact portions (21a, 21b) extending substantially in a radial direction of the engagement element, the engagement element snuggly fitting into the space defined by the one or more blocking portions such that the one or more contact portions are substantially engaged with the one or more blocking portions when the engagement element Is engaged with the receptacle element,
wherein the connection mechanism further comprises a seal (3) configured to seal a connecting region between the first passage (1a) and the second passage (2a),
the at least one receptacle element (11) and a further engagement element (12) are arranged on axial ends of the first component (10), and the at least one engagement element (21) and a further receptacle element (22) are arranged on axial ends of the second component (20),
the engagement and further engagement elements (21, 12) being engageable with the receptacle and further receptacle elements (11,22) by a translational movement of the first and the second component (10, 20) relative to each other, the translational movement being
(i) linear In a substantially radial direction relative to the axial direction of the first and/or second component, or
(ii) along a curved path ending in a substantially radial direction relative to the axial direction of the first and/or second component, and
wherein that the receptacle and further receptacle elements inhibit axial movement of the engagement and further engagement elements when the engagement elements are engaged with respective receptacle elements, the connection mechanism being **characterized in that** the seal is a c-seal (3) which is configured to seal the connection region by internal pressure of the hydraulic system when the at least one receptacle element (11) and the at least one engagement element (12) are engaged, wherein the open section of the C-seal (3) is exposed to the internal fluid pressure and wherein the C-seal (3) is provided in a sealing seat portion (3a) in the first component (10) or second component (20).

2. The connection mechanism of claim 1, wherein the first and second elements (10, 20) are tubular hydraulic components, and preferably, the openings of the first and second passages (1a, 2a) being substantially of the same cross sectional shape and configured for being substantially co-aligned when the receptacle elements (11) and the engagement elements (21) are engaged.

3. The connection mechanism of claim 2, wherein a centre point of the opening of the first passage (1a) and a centre point of the opening of the second passage (2a) substantially coincide when the receptacle elements (11) and the engagement elements (21) are engaged, and wherein the respective centre points do not coincide when the receptacle elements (11) and the engagement elements (21) are not engaged.

4. The connection mechanism of any one of the preceding claims, wherein
the further engagement element (12) being integrally formed with the at least one receptacle element (11), and
the further receptacle element (22) being Integrally formed with the at least one engagement element (21).

5. The connection mechanism of any one of the preceding claims, wherein
the at least one receptacle element (11), and optionally the further engagement element (12), is arranged radially about the opening of the first passage (1a), optionally adjacent to each other, and further optionally symmetrically with respect to a centre point of the opening of the first passage (1a), and
the at least one engagement element (21), and optionally the further receptacle element (22), is arranged radially about the opening of the second passage (2a), optionally adjacent to each other, and further optionally symmetrically with respect to a centre point of the opening of the second passage (2a).

6. The connection mechanism of claim 5, wherein
the at least one receptacle element (11), and optionally the further engagement element (12), is arranged in a half-ring geometry, and
the at least one engagement element (21), and optionally the further receptacle element (22), is arranged to have a corresponding geometry as the at least one receptacle element (11), and optionally the further engagement element (12).

7. The connection mechanism of any one of the preceding claims, wherein the receptacle elements (11) and the engagement elements (21) are configured as interlocking elements.

8. The connection mechanism of any one of the preceding claims, further comprising at least one fastening element which is securable with at least one of the receptacle elements (11) and the engagement elements (21) while engaged to inhibit radial movement of the receptacle elements relative to the engagement elements.

9. The connection mechanism of any one of the preceding claims, wherein the first and second components (10, 20) are made of metal, plastic or combinations thereof.

10. The connection mechanism of any one of the preceding claims, wherein the receptacle element (11) includes a protrusion receiving portion or a protrusion, and the engagement element (21) includes a protrusion or a protrusion receiving portion, respectively, the protrusion extending in the radial direction and configured to engage with the protrusion receiving portion in the course of the translational movement, to block movement in a rotational direction about the components' axes.

## Patentansprüche

1. Verbindungsmechanismus für ein Hydrauliksystem, aufweisend:
ein erstes Bauteil (10) mit einem ersten äußeren Körper, der einen ersten Durchlass (1a) in einer axialen Richtung zum Hindurchfördern von Fluid definiert,
ein zweites Bauteil (20) mit einem zweiten äußeren Körper, der einen zweiten Durchlass (2a) in einer axialen Richtung zum Hindurchfördern von Fluid definiert,
mindestens ein Aufnahmeelement (11) mit einem oder mehreren Sperrabschnitten (11a, 11b, 11c), wobei der eine oder die mehreren Sperrabschnitte einen Raum in dem Aufnahmeelement definieren, und
mindestens ein Eingriffselement (21) mit einem oder mehreren Kontaktabschnitten (21a, 21b), die sich im Wesentlichen in einer radialen Richtung des Eingriffselements erstrecken, wobei das Eingriffselement eng in den Raum passt, der durch die durch den einen oder die mehreren Sperrabschnitte definiert ist, so dass der eine oder die mehreren Kontaktabschnitte im Wesentlichen mit dem einen oder den mehreren Sperrabschnitten in Eingriff stehen, wenn das Eingriffselement mit dem Aufnahmeelement in Eingriff steht,
wobei der Verbindungsmechanismus ferner eine Dichtung (3) aufweist, die dazu ausgebildet ist, einen Verbindungsbereich zwischen dem ersten Durchlass (1a) und dem zweiten Durchlass (2a) abzudichten,
das mindestens eine Aufnahmeelement (11) und ein weiteres Eingriffselement (12) an axialen Enden des ersten Bauteils (10) angeordnet sind und das mindestens eine Eingriffselement (21) und ein weiteres Aufnahmeelement (22) an axialen Enden des zweiten Bauteils (20) angeordnet sind,
wobei die Eingriffs- und weiteren Eingriffselemente (21, 12) durch eine translatorische Bewegung des ersten und des zweiten Bauteils (10, 20) relativ zueinander mit den Aufnahme- und weiteren Aufnahmeelementen (11, 22) in Eingriff bringbar sind, wobei die translatorische Bewegung
(i) linear in einer im Wesentlichen radialen Richtung relativ zu der axialen Richtung des ersten und/oder zweiten Bauteils oder
(ii) entlang eines gekrümmten Wegs verläuft, der in einer im Wesentlichen radialen Richtung relativ zu der axialen Richtung des ersten und/oder zweiten Bauteils endet, und
wobei die Aufnahme- und weiteren Aufnahmeelemente eine axiale Bewegung der Eingriffs- und weiteren Eingriffselemente hemmen, wenn die Eingriffselemente mit jeweiligen Aufnahmeelementen in Eingriff stehen, wobei der Verbindungsmechanismus **dadurch gekennzeichnet ist, dass** die Dichtung eine C-Dichtung (3) ist, die dazu ausgebildet ist, den Verbindungsbereich durch inneren Druck des Hydrauliksystems abzudichten, wenn das mindestens eine Aufnahmeelement (11) und das mindestens eine Eingriffselement (12) in Eingriff stehen, wobei der offene Abschnitt der C-Dichtung (3) dem inneren Fluiddruck ausgesetzt ist und wobei die C-Dichtung (3) in einem Dichtungssitzabschnitt (3a) in dem ersten Bauteil (10) oder zweiten Bauteil (20) vorgesehen ist.

2. Verbindungsmechanismus nach Anspruch 1, bei dem die ersten und zweiten Elemente (10, 20) röhrenförmige Hydraulikbauteile sind und bevorzugt die Öffnungen der ersten und zweiten Durchlässe (1a, 2a) im Wesentlichen die gleiche Querschnittsform haben und dazu ausgebildet sind, im Wesentlichen zusammen ausgerichtet zu sein, wenn die Aufnahmeelemente (11) und die Eingriffselemente (21) in Eingriff stehen.

3. Verbindungsmechanismus nach Anspruch 2, bei dem ein Mittelpunkt der Öffnung des ersten Durchlasses (1a) und ein Mittelpunkt der Öffnung des zweiten Durchlasses (2a) im Wesentlichen zusammenfallen, wenn die Aufnahmeelemente (11) und die Eingriffselemente (21) in Eingriff stehen, und wobei die jeweiligen Mittelpunkte nicht zusammenfallen, wenn die Aufnahmeelemente (11) und die Eingriffselemente (21) nicht in Eingriff stehen.

4. Verbindungsmechanismus nach einem der vorstehenden Ansprüche, bei dem
das weitere Eingriffselement (12) integral mit dem mindestens einen Aufnahmeelement (11) gebildet ist und
das weitere Aufnahmeelement (22) integral mit dem mindestens einen Eingriffselement (21) gebildet ist.

5. Verbindungsmechanismus nach einem der vorstehenden Ansprüche, bei dem
das mindestens eine Aufnahmeelement (11), und optional das weitere Eingriffselement (12), radial um die Öffnung des ersten Durchlasses (1a), optional aneinander angrenzend und ferner optional symmetrisch in Bezug auf einen Mittelpunkt der Öffnung des ersten Durchlasses (1a) angeordnet sind und
das mindestens eine Eingriffselement (21), und optional das weitere Aufnahmeelement (22), radial um die Öffnung des zweiten Durchlasses (2a), optional aneinander angrenzend und ferner optional symmetrisch in Bezug auf einen Mittelpunkt der Öffnung des zweiten Durchlasses (2a) angeordnet sind.

6. Verbindungsmechanismus nach Anspruch 5, bei dem
das mindestens eine Aufnahmeelement (11), und optional das weitere Eingriffselement (12), in einer Halbring-Geometrie angeordnet sind und
das mindestens eine Eingriffselement (21), und optional das weitere Aufnahmeelement (22), dazu angeordnet sind, eine entsprechende Geometrie wie das mindestens eine Aufnahmeelement (11), und optional das weitere Eingriffselement (12), zu haben.

7. Verbindungsmechanismus nach einem der vorstehenden Ansprüche, bei dem die Aufnahmeelemente (11) und die Eingriffselemente (21) als einander verriegelnde Elemente ausgebildet sind.

8. Verbindungsmechanismus nach einem der vorstehenden Ansprüche, der ferner mindestens ein Befestigungselement aufweist, das mit mindestens einem von den Aufnahmeelementen (11) und den Eingriffselementen (21), während dieselben in Eingriff stehen, feststellbar ist, um eine radiale Bewegung der Aufnahmeelemente relativ zu den Eingriffselementen zu hemmen.

9. Verbindungsmechanismus nach einem der vorstehenden Ansprüche, bei dem die ersten und zweiten Bauteile (10, 20) aus Metall, Kunststoff oder Kombinationen daraus hergestellt sind.

10. Verbindungsmechanismus nach einem der vorstehenden Ansprüche, bei dem das Aufnahmeelement (11) einen Vorsprung-Aufnahmeabschnitt beziehungsweise einen Vorsprung aufweist und das Eingriffselement (21) einen Vorsprung beziehungsweise einen Vorsprung-Aufnahmeabschnitt aufweist, wobei der Vorsprung sich in der radialen Richtung erstreckt und dazu ausgebildet ist, im Verlauf der translatorischen Bewegung mit dem Vorsprung-Aufnahmeabschnitt in Eingriff zu treten, um eine Bewegung in einer Drehrichtung um die Achsen der Bauteile zu sperren.

## Revendications

1. Mécanisme de raccordement destiné à un système hydraulique comprenant :
un premier composant (10) possédant un premier corps extérieur définissant un premier passage (1a) dans une direction axiale afin de livrer du fluide à travers celui-ci,
un second composant (20) possédant un second corps extérieur définissant un second passage (2a) dans une direction axiale afin de livrer du fluide à travers celui-ci,
au moins un élément de réceptacle (11) comportant une ou plusieurs parties bloquantes (11a, 11b, 11c), l'unique ou les plusieurs parties bloquantes définissant un espace dans l'élément de réceptacle, et
au moins un élément d'engrenage (21) comprenant une ou plusieurs parties de contact (21a, 21b) s'étendant principalement dans une direction radiale de l'élément d'engrenage, l'élément d'engrenage entrant facilement dans l'espace défini par l'une ou les plusieurs parties bloquantes de sorte que l'unique ou les plusieurs parties de contact sont engrenées principalement avec l'unique ou les plusieurs parties bloquantes lorsque l'élément d'engrenage est engrené avec l'élément de réceptacle,
dans lequel
le mécanisme de raccordement comprend par ailleurs un joint (3) configuré pour étancher une région de raccordement entre le premier passage (1a) et le second passage (2a),
au moins l'unique élément de réceptacle (11) et un autre élément d'engrenage (12) sont disposés sur des extrémités axiales du premier composant (10), et au moins l'unique élément d'engrenage (21) et un autre élément de réceptacle (22) sont disposés sur des extrémités axiales du second composant (20),
les éléments d'engrenage et d'autre engrenage (21, 12) étant engrenables avec les éléments de réceptacle et d'autre réceptacle (11, 22) par un mouvement translationnel du premier et du second composant (10, 20) l'un par rapport à l'autre, le mouvement translationnel étant
(i) linéaire dans une direction principalement radiale par rapport à la direction axiale du premier et/ou second composant, ou
(ii) le long d'une trajectoire incurvée se terminant dans une direction principalement radiale par rapport à la direction axiale du premier et/ou second composant, et
dans lequel les éléments de réceptacle et d'autre réceptacle inhibent le mouvement axial des éléments d'engrenage et d'autre engrenage lorsque les éléments d'engrenage sont engrenés avec les éléments de réceptacle, le mécanisme de raccordement étant **caractérisé en ce que** le joint est un joint en c (3) qui est configuré afin d'étancher la région de connexion par pression interne du système hydraulique lorsqu'au moins l'unique élément de réceptacle (11) et au moins l'unique élément d'engrenage (12) sont engrenés, dans lequel le joint en C (3) est fourni dans une partie de siège d'étanchéité (3a) dans le premier composant (10) ou le second composant (20).

2. Mécanisme de raccordement selon la revendication 1, dans lequel les premier et seconds éléments (10, 20) sont des composants tubulaires hydrauliques et de préférence, les ouvertures des premier et second passages (1a, 2a) étant principalement de la même forme sectionnelle croisée et configurée pour être principalement alignées conjointement lorsque les éléments de réceptacle (11) et les éléments d'engrenage (21) sont engrenés.

3. Mécanisme de raccordement selon la revendication 2, dans lequel un point de centrage de l'ouverture du premier passage (1a) et point de centrage de l'ouverture du second passage (2a) coïncident principalement lorsque les éléments de réceptacle (11) et les éléments d'engrenage (21) sont engrenés, et dans lequel les points de centrage respectifs ne coïncident pas lorsque les éléments de réceptacle (11) et les éléments d'engrenage (21) ne sont pas engrenés.

4. Mécanisme de raccordement selon une quelconque des revendications précédentes, dans lequel
l'autre élément d'engrenage (12) est intégralement formé avec au moins l'unique élément de réceptacle (11), et
l'autre élément de réceptacle (22) est intégralement formé avec au moins l'unique élément d'engrenage (21).

5. Mécanisme de raccordement selon une quelconque des revendications précédentes, dans lequel
au moins l'unique élément de réceptacle (11), et en option l'autre élément d'engrenage (12), est disposé radialement autour de l'ouverture du premier passage (1a), en option de manière adjacente l'un par rapport à l'autre, et davantage en option, symétriquement par rapport à un point de centrage de l'ouverture du premier passage (1a), et
au moins l'unique élément d'engrenage (21), et en option l'autre élément de réceptacle (22), est disposé radialement autour de l'ouverture du second passage (2a), en option de manière adjacente l'un par rapport à l'autre, et davantage en option, symétriquement par rapport à un point de centrage de l'ouverture du second passage (2a).

6. Mécanisme de raccordement selon la revendication 5, dans lequel
au moins l'unique élément de réceptacle (11) et en option, l'autre élément d'engrenage (12) est disposé en une géométrie semi-annulaire, et
au moins l'unique élément d'engrenage (21), et en option l'autre élément de réceptacle (22), est agencé afin d'avoir une géométrie correspondante en tant qu'au moins l'unique élément de réceptacle (11), et en option l'autre élément d'engrenage (12).

7. Mécanisme de raccordement selon une quelconque des revendications précédentes, dans lequel les éléments de réceptacle (11) et les éléments d'engrenage (21) sont configurés comme éléments d'emboîtement.

8. Mécanisme de raccordement selon une quelconque des revendications précédentes, comprenant par ailleurs au moins un élément de fixation qui est sécurisable avec au moins un des éléments de réceptacle (11) et des éléments d'engrenage (21) tout en étant engrené afin d'empêcher le mouvement radial des éléments de réceptacle par rapport aux éléments d'engrenage.

9. Mécanisme de raccordement selon une quelconque des revendications précédentes, dans lequel les premier et second composants (10, 20) sont fabriqué en métal, en plastique ou des combinaisons de ceux-ci.

10. Mécanisme de raccordement selon une quelconque des revendications précédentes, dans lequel respectivement l'élément de réceptacle (11) comporte une partie recevant une protubérance ou une protubérance, et l'élément d'engrenage (21) comporte une protubérance ou une partie recevant une protubérance, la protubérance s'étendant dans la direction radiale et configurée pour s'engrener avec la partie recevant une protubérance dans la course du mouvement translationnel, afin de bloquer le mouvement dans une direction rotative autour des axes des composants.
